(19) Europäisches Patentamt
European Patent Office
Office européen des brevets

(11) Publication number: **0 430 092 A2**

# (12) EUROPEAN PATENT APPLICATION

(21) Application number: **90122386.7**

(22) Date of filing: **23.11.90**

(51) Int. Cl.5: **C08L 9/00**, C08L 101/00, //(C08L9/00,101:00), (C08L101/00,9:00)

(30) Priority: **29.11.89 JP 307250/89**

(43) Date of publication of application: **05.06.91 Bulletin 91/23**

(84) Designated Contracting States: **DE FR GB Bulletin 00/1**

(71) Applicant: **NIPPON OIL CO. LTD.**
**3-12, Nishi Shinbashi 1-chome**
**Minato-ku Tokyo(JP)**

(72) Inventor: **Aoki, Nobuo**
**4-5-201, Wakabadai, Asahi-ku**
**Yokohama-shi, Kanagawa-ken(JP)**
Inventor: **Suzuki, Shinichiro**
**155-72 Honmokuosato-cho, Naka-ku**
**Yokohama-shi, Kanagawa-ken(JP)**
Inventor: **Sato, Hisatake**
**1-22-12 Nakatehara, Kouhoku-ku**
**Yokohama-shi, Kanagawa-ken(JP)**

(74) Representative: **Kirby, Harold Douglas Benson et al**
**G.F. Redfern & Company Marlborough Lodge**
**14 Farncombe Road**
**Worthing West Sussex BN11 2BT(GB)**

## (54) Resin composition.

(57) Resin compositions are disclosed for use as engineering plastic grades. A selected class of cured polybutadienes of specified configuration is crosslinked with a selected class of thermoplastic or thermosetting resins. The resultant composition is highly capable of exhibiting superior heat distortion temperature, great impact strength and adequate dielectric constant.

**FIG.1**

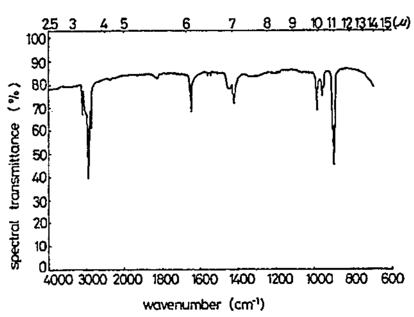


EP 0 430 092 A2

# RESIN COMPOSITION

This invention relates generally to resin compositions and more particularly to such a composition having superior thermal, electrical and mechanical characteristics.

Numerous grades of synthetic polymers have of late been applied as engineering plastics which are reputed in certain fields of industries as good replacements for structural materials such as metals and metal oxides. Engineering plastics are required, in addition to weight saving and corrosion resistance qualities peculiar to commodity plastics, to be thermally resistant, electrically unique and mechanically strong. Taken as determinant of and critical to the nature of engineering plastics are high heat distortion temperature, low thermal expansion, small dielectric constant, low dielectric loss and great impact strength.

Prior engineering plastics include a thermosetting class of epoxy resin, unsaturated polyester, phenol resin, radically cured polybutadiene and the like, and a thermoplastic class of nylon-66, polycarbonate, polyphenylene oxide, polyethylene terephthalate and the like. Polyphenylene sulfide, polyimide, wholly aromatic polyester and the like are of a speciality class.

The engineering plastics are known which are designed to provide a good balance between and among high heat distortion temperature, small dielectric constant and great impact strength. Polysulfone among other engineering plastics of a thermoplastic class has improved heat distortion temperature at about 170°C but to an extent to invite deteriorated dielectric constant, say 3.1 at 1 MHz, entailing limited application. Polyethylene tends to induce too low a heat distortion temperature of about 50°C even with an adequate dielectric constant of 2.3 and a great tensile strength of 50 kgf•cm/cm on an Izod procedure with notching, meaning that such resin falls outside the scope of engineering plastics.

The foregoing situation of the prior art has lent impetus to the provision of plastics which can exhibit a heat distortion temperature higher than 150°C, a dielectric constant smaller than 2.8 and an Izod tensile strength greater than 3 kgf•cm/cm.

It has now been found that resin compositions of the above desired characteristics can be achieved by the use of a cured polybutadiene of a specified configuration combined with a selected thermoplastic or thermosetting resin, which cured polybutadiene is derived by reacting a selected base polybutadiene with a selected coreactant compound. The present invention therefore seeks to provide a novel resin composition which excels in heat resistance, mechanical strength and electrical behavior.

The resin composition according to the invention is applicable particularly to aircraft bodies, automobile chassis and component parts for electrical and electronic equipment.

Many other objectives and advantages of the invention will become clear upon a reading of the following description in conjunction with the accompanying drawings.

More specifically, one aspect of the invention provides a resin composition comprising 100 parts by weight of a cured polybutadiene resulting from crosslinking a base butadiene polymer having a vinyl content of more than 40% by mol of a total butadiene monomer, at a crosslink reactivity of greater than 70% of the vinyl content, and 20 to 900 parts by weight of at least one thermoplastic or thermosetting resin.

Another aspect of the invention provides a resin composition comprising 100 parts by weight of a cured polybutadiene resulting from crosslinking a base butadiene polymer having a vinyl content of more than 40% by mol of a total butadiene monomer, at a crosslink reactivity of greater than 70% of the vinyl content, with a coreactant compound at a temperature of from 240 to 320°C, the coreactant compound having the formula

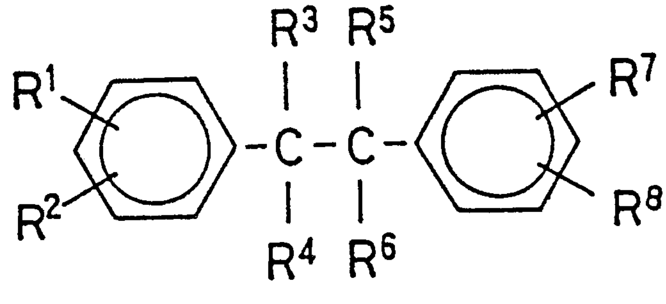

where $R^1$, $R^2$, $R^7$ and $R^8$ are a hydrogen or halogen atom, or an alkyl group of 1 to 3 carbon atoms or a nitrile group, and $R^3$, $R^4$, $R^5$ and $R^6$ are an alkyl group of 1 to 3 carbon atoms, and 20 to 900 parts by weight of at least one thermoplastic or thermosetting resin.

Figures 1 and 2 are spectral representations, prior to and after heat treatment, of a cured polybutadiene according to the invention, and Figures 3 and 4 are views similar to Figures 1 and 2 but explanatory of a control polybutadiene.

Resin compositions, contemplated under the present invention, are made up essentially of a cured polybutadiene, hereunder called component I, and a thermoplastic or thermosetting resin, called component II.

Component I is obtainable by crosslinkage of a specific type of base butadiene polymers. This component may also be produced by reacting such a butadiene polymer with a coreactant of the formula

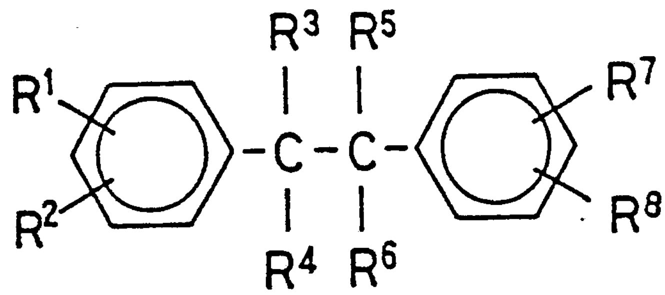

where $R^1$, $R^2$, $R^7$ and $R^8$ are a hydrogen or halogen atoms, or an alkyl group of 1 to 3 carbon atoms or a nitrile group, and $R^3$, $R^4$, $R^5$ and $R^6$ are an alkyl group of 1 to 3 carbon atoms.

Butadiene polymers for use as component I may be derived by various modes of reaction of butadiene such as anionic polymerizaion initiated by a sodium dispersant and an organoalkali catalyst, radical polymerization by an organic peroxide, cationic polymerization by a Friedel-Crafts type catalyst and anionic coordination polymerization by a Ziegler type catalyst. The resultant polymer usually has vinyl, cis and trans bonds.

The base butadiene polymer according to the invention should have a vinyl content of not smaller than 40%, preferably greater than 50%, more preferably greater than 70%, all percentages by mol of a total butadiene monomer. Importantly, the vinyl content in component I should be held in crosslinked condition in a proportion of greater than 70%. Above 80% is still better and above 90% most preferable.

The vinyl content subjected to crosslinking is determined by infrared spectrophotometry from the following equation.

$$C = \frac{A - B}{A} \times 100\ (\%)$$

C : crosslink reactivity
A : vinyl content prior to cure
B : vinyl content after cure

The base butadiene polymer used herein should be regulated in its number average molecular weight to range from 500 to 100,000, preferably from 1,000 to 20,000, more particularly from 1,500 to 8,000. This molecular weight if not exceeding 500 would lead to prolonged curing and if exceeding 100,000 would render the ultimate polymer objectionably viscous and hence difficult to handle while in curing.

The butadiene polymer according to the invention may be reformed at will in conventional manner with the use of a suitable acid or peroxide so that the polymer is so configured as to have hydroxyl or carboxyl groups chemically bonded to the molecule. Typical examples include a polybutadiene having incorporated maleic anhydride, and a polybutadiene resulting from expoxidizing its carbon-carbon double bonds. In either instance, however, strict observance is necessary with respect to the above requirements of vinyl contents.

Alternatively, the base butadiene polymer is feasible in copolymeric form. To this end butadiene may be copolymerized for instance with styrene, α-methylstyrene, acrylonitrile or the like among which styrene is better chosen. The vinyl content in either copolymer should be dominated as specified above.

Coreactant compounds employed to crosslink a given butadiene polymer may be selected for example from 2,3-dimethyl-2,3-diphenylbutane, 2,3-diethyl-2,3-diphenylbutane, 2,3-dimethyl-2,3-di(p-methylphenyl)-butane, 2,3-dimethyl-2,3-di(p-chlorophenyl)butane, 2,3-dimethyl-2,3-di(p-iodophenyl)butane, 2,3-dimethyl-2,3-di(p-nitrolphenyl)butane and the like. Particularly preferred are 2,3-dimethyl-2,3-diphenylbutane and 2,3-diethyl-2,3-diphenylbutane, and better chosen is the former compound.

The coreactant compound should be added in an amount of 0.005 to 10 parts, preferably 0.05 to 4 parts, more particularly 0.2 to 2 parts, all parts by weight based on 100 parts by weight of a given base polymer. Below 0.005 part would fail to give sufficient curing, whereas 10 parts would be only costly without better fruit.

In producing component I reaction temperatures may be set at from 240 to 320 °C, preferably from 250 to 310 °C, more preferably from 260 to 300 °C. Lower temperatures than 240 °C would not be effective for sufficient curing, and higher temperatures than 320 °C would develop thermal decomposition and hence objectionable coloration. Reaction durations, though dependent upon cure temperatures, are feasible in the range of 10 minutes to 10 hours, preferably 20 minutes to 3 hours.

Curing may be effected, though not restricted, in a solvent-free atmosphere. A suitable solvent or plasticizer may if necessary be present as a curing aid which however should not be vaporable at a given cure temperature. Preheating is sometimes convenient at lower than 240 °C, for example in the range of 100 to 200 °C, so that a substantially half-cured butadiene polymer is obtainable which is rather easy of subsequent crosslinking.

Compound II is one or more resins of a thermoplastic or thermosetting class. Specific examples of thermoplastic resins include polyethylene, polypropylene, polybutene, poly-4-methylpentene-1, polystyrene, poly-α-methylstyrene, acrylonitrile-butadiene-styrene terpolymer, polyvinyl chloride, polytetrafluoroethylene, polymethyl methacrylate, aliphatic polyamide, aromatic polyamide, polyacetal, polycarbonate, polyethylene terephthalate, polyethylene oxide, polyphenylene sulfide, polysulfone, polyethersulfone, polyetherether ketone, wholly aromatic polyester, polyimide and the like. Better choices are polyethylene, acrylonitrile-butadiene-styrene terpolymer, polytetrafluoroethylene, wholly aromatic polyester and polyimide. Thermosetting resins may be selected from epoxy resin, unsaturated polyester, phenol resin, melamine resin, polyurethane and the like among which epoxy resin and polyurethane are particularly preferred. To attain higher heat distortion temperature, the thermosetting resin may suitably be incorporated after curing.

Component II, thermoplastic or thermosetting, should be added in an amount of 20 to 900 parts, preferably 25 to 600 parts, more preferably 35 to 400 parts, all parts by weight based on 100 parts by weight of component I. Less than 20 parts would be ineffective in improving mechanical strength, and more than 900 parts would lead to inadequate thermal or mechanical qualities.

The resin composition of the invention may be produced for instance by blending previously pulverized component I with component II, or by reacting a given base butadiene polymer for component I with component II at from 240 to 320 °C. The former mode of blending is preferred to gain a resin composition of higher heat resistance. Pulverization may be effected by subjecting cured component I to mechanical milling, or by curing a selected base butadiene polymer with a selected resin or resins of component II in emulsified condition. Particulate component I is not specifically limitive in particle size but preferably useful in the range of 0.1 to 500 μm, more preferably 0.5 to 100 μm, most preferably 1 to 50 μm.

Various inorganic fillers may be employed which are chosen from those of particulate, fibrous, spherical and similar shapes. Particulate fillers include metal oxides such as iron oxide, alumina, magnesium oxide and the like, metal oxide hydrates such as aluminum hydroxide, magnesium hydroxide, calcium hydroxide and the like, carbonate salts such as calcium carbonate and the like, and silicate salts such as talc, clay and the like. Fibrous fillers are fibers such as of carbon, glass, potassium stannate, ceramics, metal carbide and the like. The amount of the filler may be up to 200 parts by weight per 100 parts by weight of the resin composition.

## EXAMPLES

The present invention will now be described by way of the following examples which should be regarded as illustrative rather than restrictive. In these examples all parts are indicated by weight unless otherwise noted.

### Example 1

To 100 g of a liquid butadiene of 3,000 in number average molecular weight, of 65% by mol in vinyl content and of 500 cp at 25 °C in viscosity (Polybutadiene B-3000, Nippon Petrochemicals Co.) was added 1.0 part of 2,3-dimethyl-2,3-diphenylbutane. The mixture was stirred at 80 °C to give a curable material. Uniform coating of that material was applied by a spinner over a NaCl plate on which a similar NaCl plate was then superimposed. There was provided a test specimen according to the invention in which the curable material was sandwiched between the two plates. Infrared analysis was made on a spectrophotomer (IR-420, Shimadzu Seisakusho Co.) with the results shown in Figure 1.

The test specimen was cured for 2 hours in a chamber replaced with nitrogen and maintained at 290 °C, followed by analysis by means of the above spectrophotometer, with the results shown in Figure 2 in which the vinyl bond was represented at an absorbance of 910 $cm^{-1}$. Crosslink reactivity was proved to be 90.4% as counted from Lambert-Beer's law by taking an absorbance of 2,900 $cm^{-1}$ as a standard.

The resulting curable mixture was poured into a brass mold which was immersed for curing in a temperature-constant chamber at 290 °C for 2 hours. The resulting cured product was comminuted on an impact type micronizer to provide a particulate polybutadiene having an average particle size of 16 µm.

100 Parts of the cured micronized polybutadiene and 40 parts of a high density polyethylene (Staflene E809, Nippon Petrochemicals Co.) were kneaded at 200 °C for 10 minutes and thereafter molded by pressing. Examination of the molded product was made for heat distortion temperature on a tester (HD-500-PC, Yasuda Seiki Seisakusho Co.), dielectric constant on a tester (Q-meter, Yokogawa-Hewlett-Packard Ltd.) and Izod impact strength by the JIS K-7110 procedure. The results are as per tabulated.

Comparative Example 1

The procedure of Example 1 was followed for except that 1.0 part of dicumyl peroxide was used in place of 2,3-dimethyl-2,3-diphenylbutane and that stirring was done at 50 °C, whereupon a curable material was obtained as a control.

The resulting material was used to form a test sample of two NaCl plates laminated as in Example 1 and cured in a chamber regulated at 160 °C for 2 hours. Figure 3 is directed to an infrared analysis of the curable material and Figure 4 to that of the cured product. Crosslink reactivity was determined to be 11.9%. The curable material was poured into a brass mold which was immersed for curing in a temperature-constant chamber at 160 °C for 2 hours. Micronization of the cured product gave a particulate polybutadiene having an average particle size of 17 µm.

The particulate polybutadiene thus obtained was treated and examined as in Example 1 with the results tabulated.

Comparative Example 2

The cured product, not micronized, in Comparative Example 1 was examined for its physical properties. The results are as per tabulated.

Comparative Example 3

The high density polyethylene used in Example 1 was determined with respect to the test properties in the manner described in Example 1. The results are as per tabulated.

Example 2

To 100 parts of a liquid polybutadiene of 2,000 in number average molecular weight, of 65% by mol in vinyl content and of 15 cp at 25 °C in viscosity (Nisseki Polybutadiene B-2000, Nippon Petrochemicals Co.) were added 40 parts of a polybutene (Nisseki Polybutene HV300, Nippon Petrochemicals Co.) and 1.0 part of 2,3-dimethyl-2,3-diphenylbutane. The mixture was kneaded at 100 °C, followed by curing in a temperature-constant chamber at 290 °C for 3 hours. Subsequent treatments and examinations were done as in Example 1 with the results tabulated.

Example 3

The procedure of Example 1 was followed except that 100 parts of the cured micronized polybutadiene provided in Example 1 was kneaded with 100 parts of a wholly aromatic, liquid crystal polyester (Xydar SRT-300, Nippon Petrochemicals Co.). The results are as per tabulated.

Example 4

To 100 parts of the cured micronized polybutadiene as in Example 1 were added 120 parts of a bisphenol A type epoxy resin of 186 in epoxy equivalent (Epikote 828, Yuka-Shell Epoxy Co.) and 3.6 parts of a monoethylamine complex of boron trifluoride. The whole mixture was admixed at 50 °C, followed by pouring into a mold and by subsequent curing in a temperature-constant chamber at 180 °C for 2 hours.

The results are as per tabulated.

Example 5

A mixture was stirred at 50 °C which was composed of 100 parts of the liquid polybutadiene as in Example 1, 120 parts of the epoxy resin as in Example 4, 1.0 part of 2,3-dimethyl-2,3-diphenylbutane and 3.6 parts of a monoethylamine complex of boron trifluoride. The resultant mixture was taken into a mold and held in a temperature-constant chamber at 180 °C for 2 hours, followed by curing in a temperature-constant chamber at 290 °C for 2 hours. The results are as per attached.

Table

| | heat distortion temperature (°C) | dielectric constant (1 MHz) | Izod impact strength (kgf·cm/cm) |
|---|---|---|---|
| Example 1 | 172 | 2.23 | 5.1 |
| Comparative Example 1 | 61 | 2.25 | 5.0 |
| Comparative Example 2 | 371 | 2.31 | 0.7 |
| Comparative Example 3 | 49 | 2.30 | 45.1 |
| Example 2 | 170 | 2.35 | 8.8 |
| Example 3 | 365 | 2.65 | 5.1 |
| Example 4 | 214 | 2.68 | 3.7 |
| Example 5 | 165 | 2.69 | 3.6 |

**Claims**

1. A resin composition comprising:
   (a) 100 parts by weight of a cured polybutadiene resulting from crosslinking a base butadiene polymer having a vinyl content of more than 40% by mol of a total butadiene monomer, at a crosslink reactivity of greater than 70% of the vinyl content; and
   (b) 20 to 900 parts by weight of at least one of thermoplastic and thermosetting resins.

2. The composition of claim 1 wherein the base butadiene polymer has a number average molecular weight of from 500 to 100,000.

3. The composition of claim 1 wherein the base butadiene polymer is a copolymer derived by reacting butadiene with a comonomer.

4. The composition of claim 3 wherein the comonomer is styrene, α-styrene or acrylonitrile.

5. The composition of claim 1 wherein the cured polybutadiene is in a particulate form having a particle size of from 0.1 to 500 µm.

6. The composition of claim 1 wherein the thermoplastic resin is polyethylene, polypropylene, polybutene, poly-4-methylpentene-1, polystyrene, poly-α-methylstyrene, acrylonitrile-butadiene-styrene resin, polyvinyl chloride, polytetrafluoroethylene, polymethyl methacrylate, aliphatic polyamide, aromatic polyamide, polyacetal, polycarbonate, polyethylene terephthalate, polybutylene terephthalate, polyphenylene oxide, polyphenylene sulfide, polysulfone, polyethersulfone, polyetherether ketone, wholly aromatic polyester or polyimide.

7. The composition of claim 1 wherein the thermosetting resin is epoxy resin, unsaturated polyester, phenol resin, melamine resin or polyurethane.

8. The composition of claim 1 wherein the thermosetting resin is in a cured form.

9. A resin composition comprising:
(a) 100 parts by weight of a cured polybutadiene resulting from crosslinking a base butadiene polymer having a vinyl content of more than 40% by mol of a total butadiene monomer, at a crosslink reactivity of greater than 70% of the vinyl content, with a coreactant compound at a temperature of from 240 to 320 °C, the coreactant compound having the formula

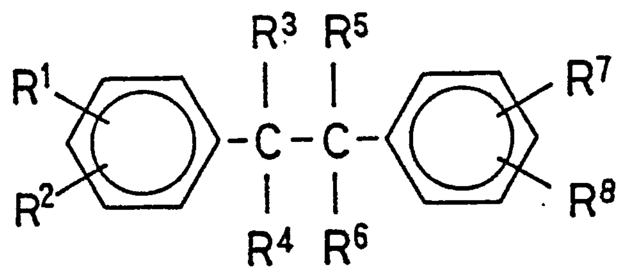

where $R^1$, $R^2$, $R^7$ and $R^8$ are a hydrogen or halogen atom, or an alkyl group of 1 to 3 carbon atoms or a nitrile group, and $R^3$, $R^4$, $R^5$ and $R^6$ are an alkyl group of 1 to 3 carbon atoms; and
(b) 20 to 900 parts by weight of at least one of thermoplastic and thermosetting resins.

10. The composition of claim 9 wherein the coreactant compound is 2,3-dimethyl-2,3-diphenylbutane, 2,3-diethyl-2,3-diphenylbutane, 2,3-dimethyl-2,3-di(p-methylphenyl)butane, 2,3-dimethyl-2,3-di(p-chlorophenyl)butane, 2,3-dimethyl-2,3-di(p-isophenyl)butane or 2,3-dimethyl-2,3-di(p-nitrophenyl)butane.

# FIG.1

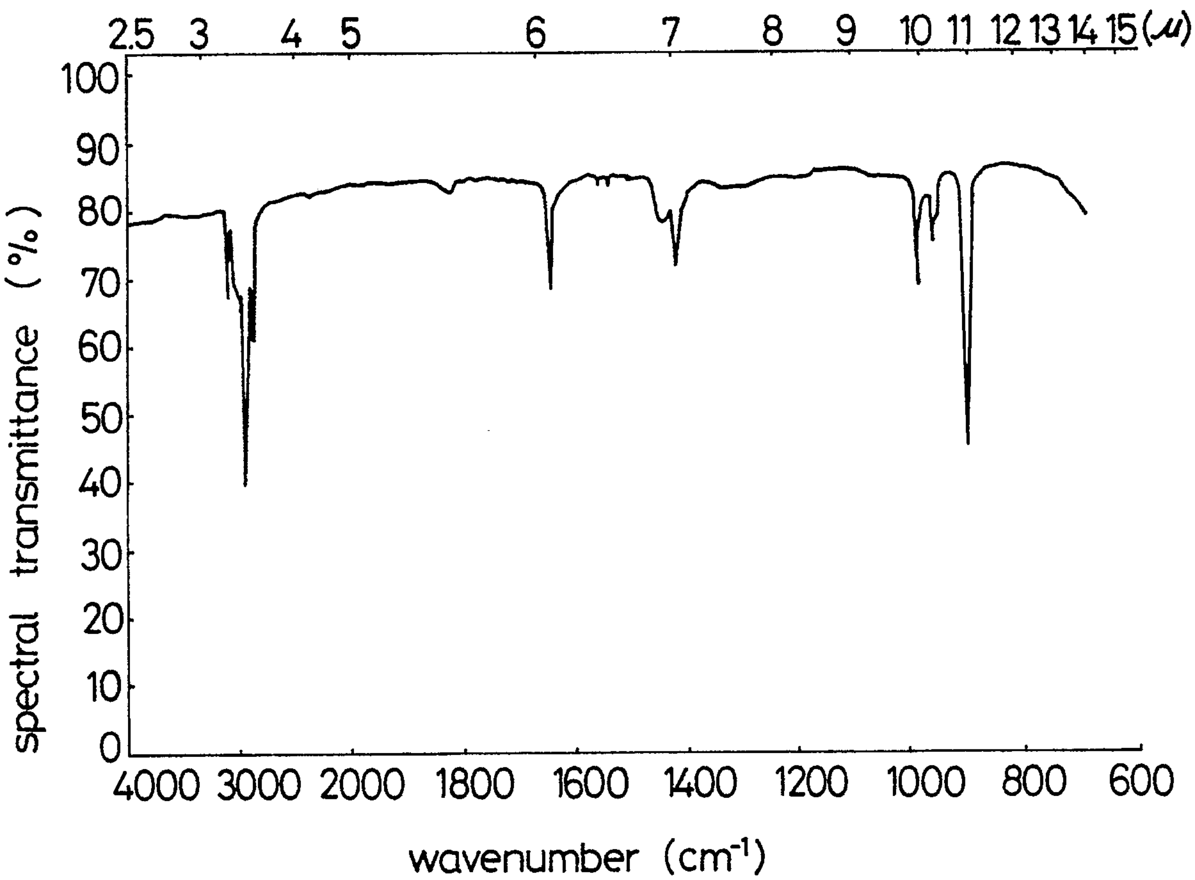
2.5 3 4 5 6 7 8 9 10 11 12 13 14 15 (μ)
100
90
80
70
60
50
40
30
20
10
0
spectral transmittance (%)
4000 3000 2000 1800 1600 1400 1200 1000 800 600
wavenumber (cm⁻¹)

# FIG.2

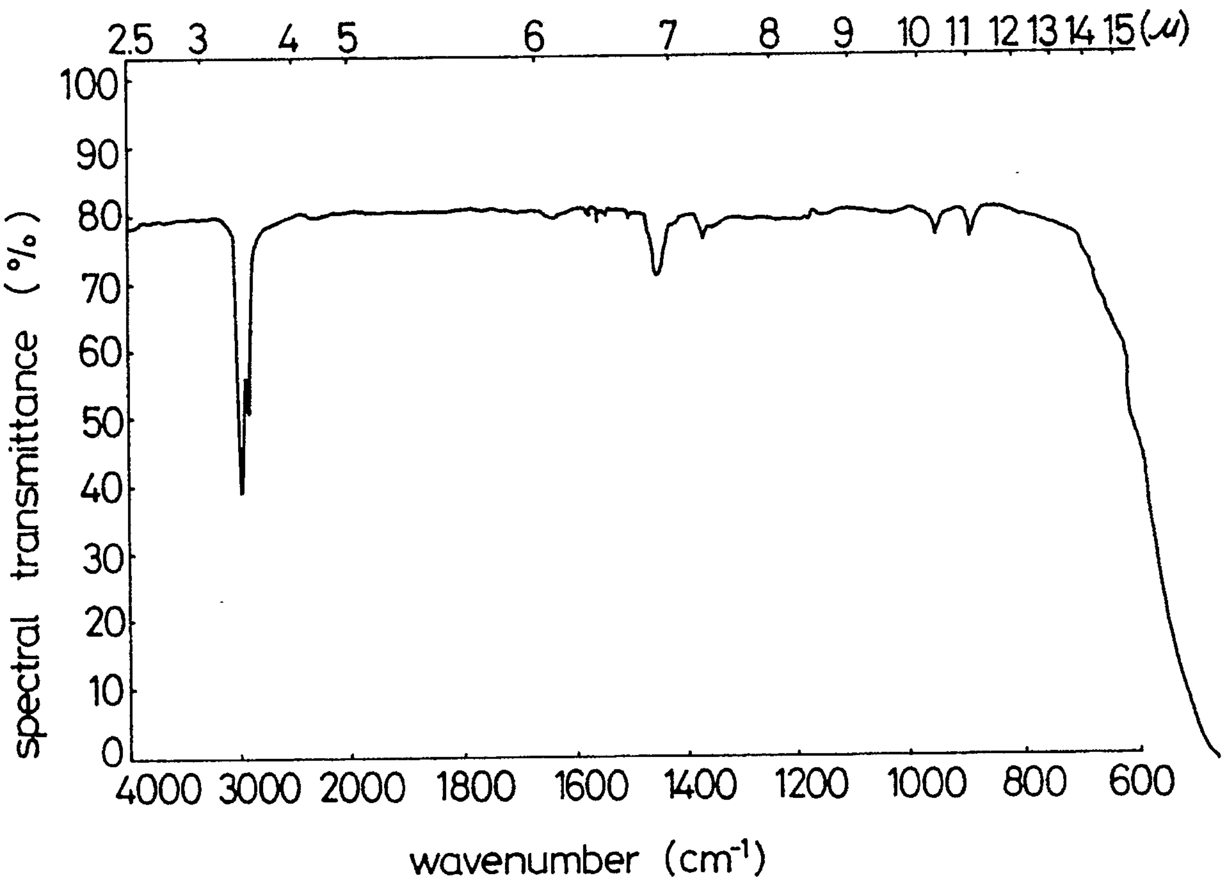
2.5 3 4 5 6 7 8 9 10 11 12 13 14 15 (μ)
100
90
80
70
60
50
40
30
20
10
0
spectral transmittance (%)
4000 3000 2000 1800 1600 1400 1200 1000 800 600
wavenumber (cm-1)

FIG. 3

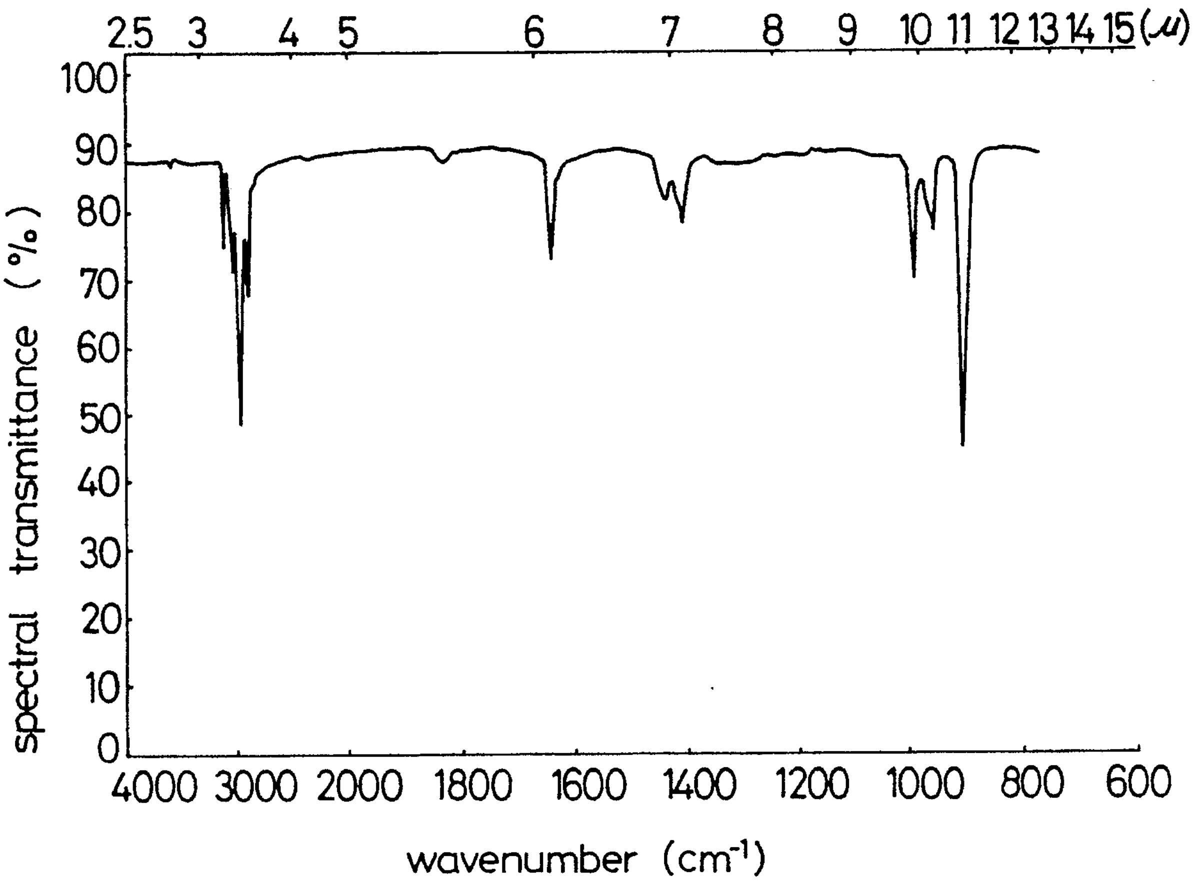
2.5 3 4 5 6 7 8 9 10 11 12 13 14 15 (μ)
100
90
80
70
60
50
40
30
20
10
0
spectral transmittance (%)
4000 3000 2000 1800 1600 1400 1200 1000 800 600
wavenumber (cm⁻¹)

FIG. 4

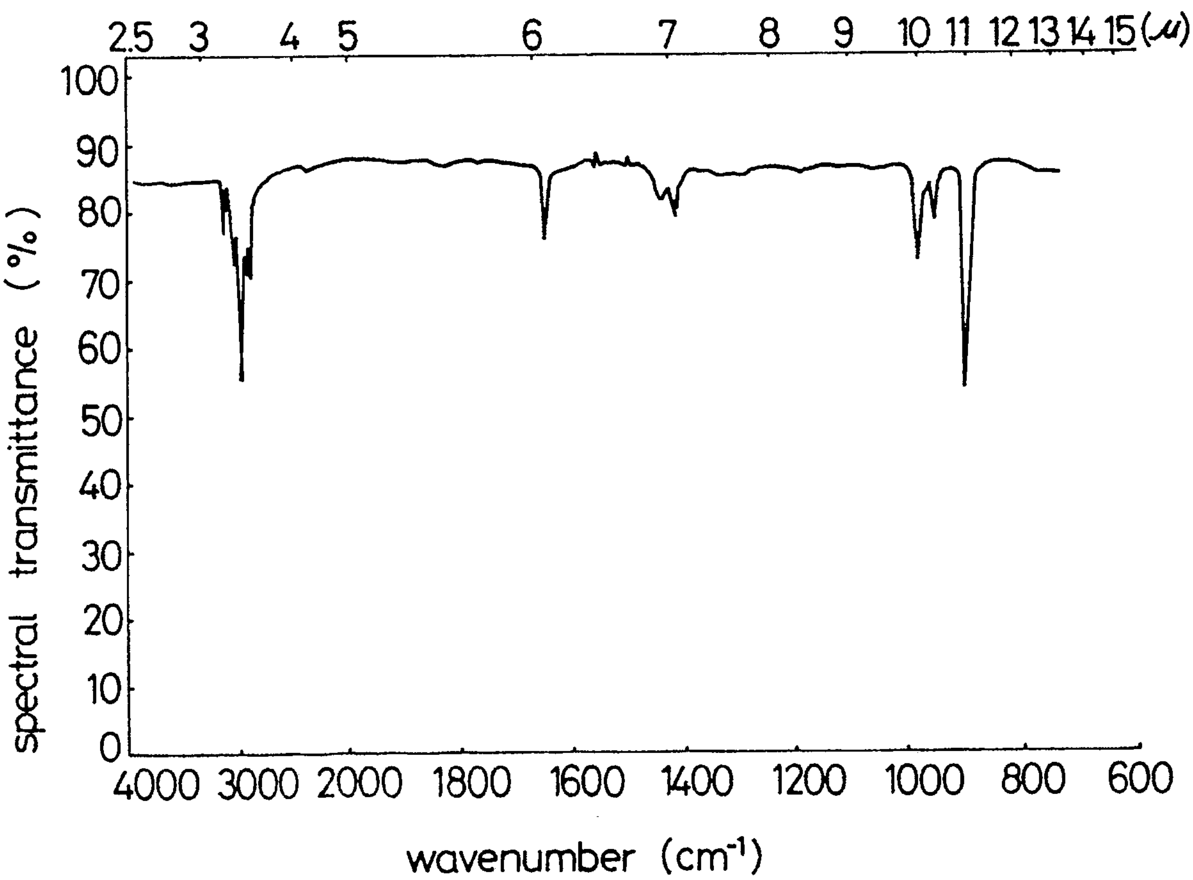
2.5 3 4 5 6 7 8 9 10 11 12 13 14 15 (μ)
100
90
80
70
60
50
40
30
20
10
0
spectral transmittance (%)
4000 3000 2000 1800 1600 1400 1200 1000 800 600
wavenumber (cm-1)